# EUROPÄISCHE PATENTSCHRIFT

(11) **EP 2 378 068 B1**
(45) Veröffentlichungstag und Bekanntmachung des Hinweises auf die Patenterteilung: **29.04.2020**
(21) Anmeldenummer: 11161054.9
(22) Anmeldetag: 04.04.2011
(51) Int. Cl.: F01D 5/02, F01D 5/08, F01D 5/10, F01D 5/22, F01D 5/30

(54) **DÄMPFUNGSYSTEM ZUR DÄMPFUNG VON SCHWINGUNGEN EINER LAUFSCHAUFEL, ZUGEHÖRIGE LAUFSCHAUFEL UND ROTOR**
DAMPING SYSTEM FOR DAMPING VIBRATIONS OF A ROTOR BLADE, CORRESPONDING ROTOR BLADE AND ROTOR
SYSTÈME D'AMORTISSEMENT POUR L'AMORTISSEMENT DE VIBRATIONS D'UNE AUBE ROTORIQUE, AUBE ROTORIQUE ET ROTOR ASSOCIÉS

(30) Priorität: 16.04.2010 DE 102010015211
(43) Veröffentlichungstag der Anmeldung: 19.10.2011
(73) Patentinhaber: MTU Aero Engines AG, 80995 München (DE)
(72) Erfinder: Borufka, Hans Peter, 82319, Starnberg (DE); Hartung, Andreas, 81829, München (DE); Prokopczuk, Patrick, 80636 München (DE); Stiehler, Frank, 04924, Bad Liebenwerda (DE)

(56) Entgegenhaltungen:
- CH-A- 301 136
- DE-A1- 2 258 604
- DE-A1- 3 008 890
- DE-T2- 68 908 676
- US-A- 3 181 835
- US-A- 4 347 040
- US-A- 4 355 957
- US-A- 4 480 959
- US-A- 4 568 247

## Beschreibung

Die Erfindung betrifft ein Dämpfungselement zur Dämpfung von Laufschaufelschwingungen einer Strömungsmaschine, eine Laufschaufel mit einem derartigen Dämpfungssystem, einen Rotor mit einer Vielzahl derartig gedämpfter Laufschaufeln und ein Verfahren zur Dämpfung von Laufschaufelschwingungen eines Rotors einer Strömungsmaschine.

Laufschaufeln von Gasturbinen wie Flugzeugtriebwerke sind zur Schwingungsdämpfung häufig innerhalb eines Schaufelkranzes über ihre Deckbänder miteinander verspannt. Hierzu haben die Deckbänder wie in dem Patent DE 40 15 206 C1 der Anmelderin gezeigt häufig eine Z-artige Gestalt mit jeweils zwei Kraftübertragungsflächen zur gegenseitigen mechanischen Kopplung. Eine derartige mechanische Kopplung ist zwar sehr effektiv, jedoch sind die Deckbänder im Bereich ihrer Kraftübertragungsflächen einem relativ hohen Verschleiß ausgesetzt.

Darüber hinaus ist es aus der EP 0 511 022 B1 bekannt, Laufschaufel über ein drahtartiges Dämpfungselement miteinander zu verspannen, das durch die Schaufelblätter geführt ist. Diese Lösung hat jedoch insbesondere den Nachteil, dass sich das drahtartige Dämpfungselement im Strömungspfad bzw. Ringraumkanal befindet. Insbesondere ist diese Lösung nicht bzw. nur bedingt bei innen gekühlten Schaufeln anwendbar.

Darüber hinaus ist es aus der europäischen Patentanmeldung EP 1 944 466 A1 bekannt, Dämpfungselemente in Taschen von benachbarten Deckbändern anzuordnen. Bei einer Rotation des Rotors werden die Dämpfungselemente aufgrund der Fliehkraft radial nach außen bewegt und bewirken somit eine mechanische Kopplung der Deckbänder. Eine optimale Einstellung der Schwingungsdämpfung ist jedoch mit diesem System nicht möglich.

Ferner ist es aus der US 3,037,741 bekannt, ein auf Fliehkraft basierendes Dämpfungssystem zu verwenden, dessen Dämpfungselemente in einem Zwischenraum zwischen zwei benachbarten Laufschaufeln angeordnet sind, der in radialer Richtung von deren Plattformen begrenzt ist. Die Dämpfungselemente sind jeweils über einen Stift in einer Rotorbohrung in radialer Richtung verschiebbar geführt sind und können somit bei einer Rotation gegen untere Bereiche der Plattformen auflaufen. Derartige Dämpfungselemente bieten jedoch aufgrund ihrer Topologie keine ausreichende Dämpfung insbesondere von Torsionsschwingungsformen. Außerdem ist der zur Verfügung stehende konstruktive Gestaltungsraum sehr begrenzt, so dass die Gestaltung und Größe dieser Dämpfungselemente ihre Auslegungs- und Umsetzungsanforderungen nur bedingt respektive nicht erfüllen.

Die DE 30 08 890 offenbart einen Rotor für ein Gasturbinentriebwerk, das zu Dämpfungszwecken ein Dämpfungsgewicht aufweist, das bei Rotation radial nach außen gedrückt wird und reibschlüssig an der inneren Oberfläche einer Plattform angreift.

Weitere Dämpfungssysteme sind aus den DE 22 58 604 A1, US 3 181 835 A, CH 301 136 A, US 4 347 040 A, US 4 568 247 A, US 4 355 957 A, US 4 480 959 A, DE 689 08 676 T2 bekannt.

Aufgabe der vorliegenden Erfindung ist es, ein Dämpfungssystem zur Dämpfung von Laufschaufelschwingungen einer Strömungsmaschine, eine Laufschaufel mit einem derartigen Dämpfungssystem, einen Rotor mit einer Vielzahl von derartig gedämpften Laufschaufeln zu schaffen.

Diese Aufgabe wird gelöst durch ein Dämpfungssystem mit den Merkmalen des Patentanspruchs 1, durch eine Laufschaufel mit den Merkmalen des Patentanspruchs 7 und durch einen Rotor mit den Merkmalen des Patentanspruchs 9.

Ein erfindungsgemäßes Dämpfungssystem zur Dämpfung von Schwingungen einer Laufschaufel eines Rotors einer Strömungsmaschine, beispielsweise eines Flugzeugtriebwerks, hat ein Dämpfungselement, das an einem schaufelseitigen Träger so geführt ist, dass es bei einer Rotation des Rotors fliehkraftbasierend eine radial nach außen gerichtete Bewegung ausführt und in Anlage mit einem unteren Plattformbereich der Laufschaufel bringbar ist.

Das erfindungsgemäße Dämpfungssystem erlaubt eine Dämpfung von kritischen Schwingungsformen von Verdichter- und Turbinenlaufstufen mit und ohne Deckband, in montierter Bauweise oder integraler BLISK- (Bladed Disk) bzw. BLING- (Bladed Ring) Bauweise, mit oder ohne Schaufelkühlung sowie mit oder ohne Schaufelhohlräumen. Das Dämpfungselement ist als sogenannte reitende Masse (Rocking Damper) auf den Träger wie beispielsweise einem Coverplate oder einem Mini-Coverplate an der Laufschaufel geführt. Durch die Rotation des Rotors werden Bewegungsfreiheitsgrade des Dämpfungselementes aufgrund eines sich einstellenden Fliehkraftfeldes so ausgenutzt, dass an einer oder mehreren definierten Koppel-Kontakt-Stellen zumindest zwischen der Laufschaufel und dem selbstständig vom Fliehkraftfeld nachgeführten Dämpfungselement ein Kontakt erzeugt wird. Dabei dient die Masse des Dämpfungselementes als Optimierungsparameter und zur Definition von Schaltpunkten zwischen einem sogenannten "locked und slipping" Zustand des Dämpfungssystems.

Vorzugsweise kann das Dämpfungselement ebenfalls Bewegungen in Umfangsrichtung des Rotors ausführen, so dass das Dämpfungselement möglichst viele Bewegungsfreiheitsgrade aufweist.

Bei einem Ausführungsbeispiel ist das Dämpfungselement mittels zumindest eines Verbindungselementes an dem Träger gelagert, das in einer sich radial erstreckenden Längsnut geführt ist. Dabei ist die Längsnut vorzugsweise derart ausgeführt, dass beim Auflaufen des Dämpfungselementes auf den unteren Plattformbereich das Verbindungselement von einem in Bewegungsrichtung des Dämpfungselemente betrachtet gegenüberliegenden Wandungsabschnitt der Längsnut beabstandet und somit entlastet ist. Das heißt, das zumindest eine Verbindungselement dient lediglich als Sicherung, nicht jedoch als Begrenzung der radialen Bewegung des Dämpfungselementes. Die Begrenzung erfolgt durch den unteren Plattformbereich der Schaufel.

Bei einem anderen Ausführungsbeispiel weist das Dämpfungselement gegenüberliegende Gleitflächen zur Führung entlang zwei trägerseitiger, radial verlaufender Führungsflächen auf. Ebenso ist es vorstellbar, das Dämpfungselement verschwenkbar an dem Träger zu lagern.

Die Gefahr des Verkantens lässt sich weiter reduzieren, wenn das Dämpfungselement U-förmig ausgebildet ist und einen Kopfabschnitt des Trägers beidseitig umgreift.

Im unteren Plattformbereich ist eine von einer Erhebung gebildete umfangsseitige Anlagefläche als Anschlag für das Dämpfungselement angeordnet. Zusätzlich ist eine stirnseitige Anlagefläche zur Herstellung eines Reibkontaktes zwischen dem Dämpfungselement und der Laufschaufel vorgesehen sein. Die genaue Lage der Anlageflächen kann in Abhängigkeit der jeweiligen Schwingform eingestellt werden, so dass eine individualisierte Kontaktaufnahme zwischen dem Dämpfungselement und der Laufschaufel erfolgt und Schwingungen wirkungsvoll gedämpft werden können. Bei einem Ausführungsbeispiel sind die Anlageflächen zum Beispiel symmetrisch zur Längsfläche des Dämpfungselementes angeordnet.

Eine erfindungsgemäße Laufschaufel einer Strömungsmaschine, beispielsweise eines Flugzeugtriebwerks, hat zumindest ein Dämpfungssystem mit einem Dämpfungselement, das an einem rotorseitigen Träger so geführt ist, dass es bei einer Rotation des Rotors eine nach außen gerichtete Bewegung in Radialrichtung ausführt und in Anlage mit einem unteren Plattformbereich der Laufschaufel bringbar ist. Das Dämpfungssystem kann in axialer Rotorrichtung vor, hinter oder beidseits, also sowohl stromaufwärts als auch stromabwärts, der Laufschaufel angeordnet sein.

Ein erfindungsgemäßer Rotor einer Strömungsmaschine hat eine Vielzahl von in Schaufelreihen angeordneten Laufschaufeln, wobei an den Laufschaufeln zumindest einer Schaufelreihe Dämpfungselemente angeordnet sind, die so an einem rotorseitigen Träger geführt sind, dass sie aufgrund der Fliehkraft eine Bewegung in Radialrichtung ausführen und in Anlage mit einem unteren Plattformbereich der Laufschaufeln bringbar sind. Durch die Dämpfungselemente werden vorzugsweise Biege- und Torsionsschwingungsformen gedämpft. Dabei kann durch eine geometrische Anpassung der Kontaktgeometrie zwischen den Dämpfungselementen und den Laufschaufeln an eine Schwingungsformcharakteristik die Dämpfungswirkung optimiert respektive gesteigert werden.

Bei einem erfindungsgemäßen Verfahren zum Dämpfen von Schwingungen von Laufschaufeln einer Strömungsmaschine, beispielsweise eines Flugzeugtriebwerks, wird jeweils in einem unteren Plattformbereich der Laufschaufeln ein Dämpfungselement vorgesehen, das an einem rotorseitigen Träger geführt und aufgrund der Fliehkraft gegen den jeweiligen unteren Plattformbereich bewegt wird.

Das jeweilige Dämpfungselement reibt entlang einer stirnseitigen Anlagefläche der Laufschaufeln, so dass bei einer Rotation das Dämpferelement nicht nur an den unteren Plattformbereich gedrückt wird und mit diesem in Reibkontakt steht, sondern ebenfalls eine mechanische Dämpfung durch Energiedissipation in Folge trockener Reibung zwischen dem Dämpfungselement und der schwingenden stirnseitigen Anlageflächen erfolgt. Gegebenenfalls erfolgt ebenfalls eine mechanische Dämpfung zwischen dem Dämpferelement und dem Träger.

Sonstige vorteilhafte Ausführungsbeispiele der vorliegenden Erfindung sind Gegenstand weiterer Unteransprüche.

Im Folgenden werden bevorzugte Ausführungsbeispiele der vorliegenden Erfindung anhand schematischer Darstellungen näher erläutert. Es zeigen:
Figur 1 eine perspektivische Darstellung eines ersten erfindungsgemäßen Dämpfungssystems,
Figur 2 eine Detaildarstellung des ersten Dämpfungssystems,
Figur 3 einen Querschnitt durch das erste Dämpfungssystems,
Figur 4 eine perspektivische Darstellung eines zweiten erfindungsgemäßen Dämpfungssystems, und
Figur 5 eine Detaildarstellung des zweiten Dämpfungselements, und
Figur 6 einen Querschnitt durch das zweite Dämpfungssystems,

In den Figuren tragen gleiche konstruktive Elemente die gleichen Bezugsziffern, wobei bei mehreren gleichen konstruktiven Elementen in einer Figur aus Gründen der Übersichtlichkeit lediglich ein Element mit der jeweiligen Bezugsziffer versehen ist.

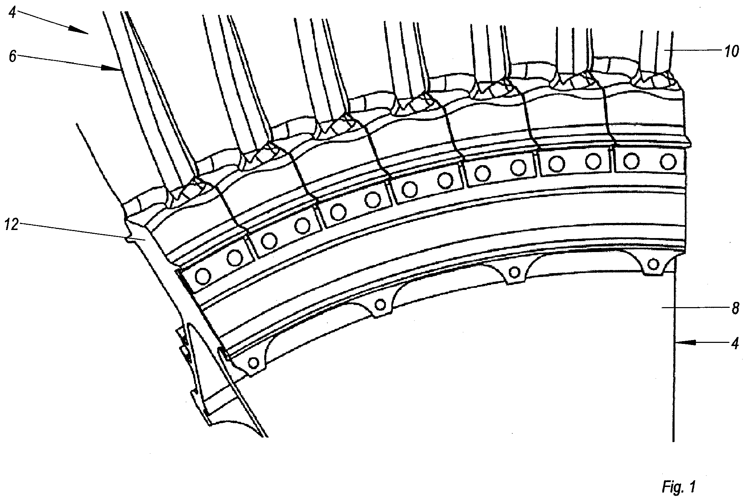

Figur 1 zeigt einen perspektiven Blick auf einen Ausschnitt einer Schaufelreihe 2 einer Rotorscheibe 4 in Strömungsrichtung. Die Schaufelreihe 2 besteht aus einer Vielzahl von Laufschaufeln 6, die beispielsweise Verdichter- oder Turbinenschaufeln einer stationären Gasturbine oder eines Flugzeugtriebwerks sein können. Sie haben jeweils einen integral mit der Scheibe 4 gefügten Scheibensteg 8, ein Schaufelblatt 10 sowie einen zwischen dem Schaufelsteg 8 und dem Schaufelblatt 10 angeordneten verbeiterten Körperabschnitt 12.

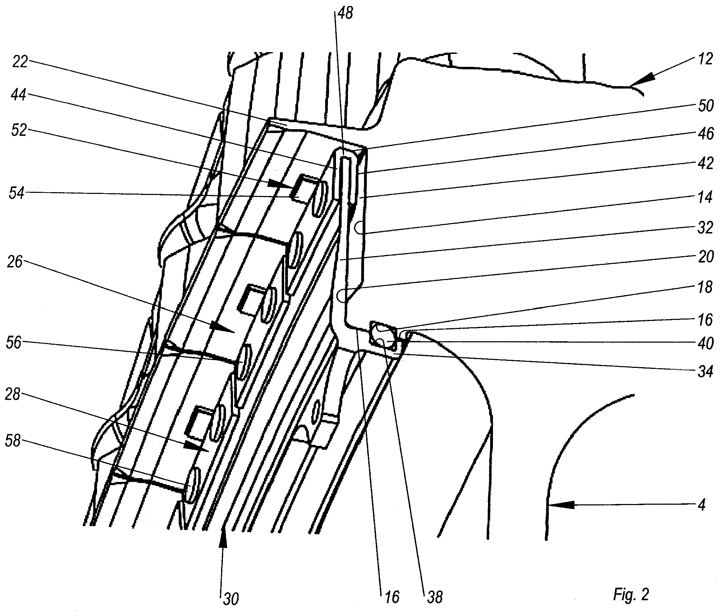

Wie in Figur 2 gezeigt hat der Körperabschnitt 12 eine entgegengesetzt zur Strömungsrichtung orientierte vordere Stirnfläche 14, und eine nahezu rechtwinklig zu dieser angestellte untere Körperfläche 16, die in Richtung einer nicht gezeigten Rotationsachse der Rotorscheibe 4 zeigt und in der eine Umfangsnut 18 ausgebildet ist. Im Kantenbereich mit der Körperfläche 16 weist die Stirnfläche 14 eine in axialer Richtung vorgelagerte Ringstirnfläche 20 auf. In radialer Richtung wird die Stirnfläche 14 von einer vorderen Plattform 22 begrenzt, die im Wesentlichen zur Reduzierung von Strömungsverlusten dient und gegenüber einer nicht gezeigten rückwärtigen hinteren Plattform im Bereich des Körperabschnitts 12 radial außenliegend angeordnet ist.

Unterhalb der vorderen Plattform 22, d. h. zwischen der vorderen Plattform 22 und einem nicht gezeigten Außenumfangsabschnitt der Rotorscheibe 4, ist ein erfindungsgemäßes Dämpfungssystem 26 angeordnet, das eine Vielzahl von Dämpfungselementen 28 aufweist, die in Umfangsrichtung der Rotorscheibe 4 nebeneinanderliegend voneinander beabstandet auf einem Träger 30 in Radialrichtung und in Umfangsrichtung bewegbar gelagert sind.

Der Träger 30 erstreckt sich über sämtliche Laufschaufeln 6 der Schaufelreihe 2 und hat in dem gezeigten Ausführungsbeispiel die Gestalt einer Ringscheibe 32 mit einem radial innenliegenden axialen Vorsprung 34, der sich nahezu rechtwinklig zur bzw. von dieser erstreckt. Der Vorsprung 34 hat in dem gezeigten Ausführungsbeispiel eine Umfangsfläche 36, mittels der er sich in Anlage mit der Körperfläche 16 des Körperabschnitts 12 befindet und in der eine Umfangsnut 38 zur Bildung eines Hohlraums mit der Umfangsnut 18 zur Aufnahme eines Sicherungsrings 40 ausgebildet ist. Die Ringscheibe 34 befindet sich in Anlage mit der Ringstirnfläche 20 des Körperabschnitts 12, wodurch ein Spalt 42 zwischen der Ringscheibe 32 und der Stirnfläche 14 gebildet ist.

Die Dämpfungselemente 28 haben hier beispielsweise jeweils eine U-fÖrmige Gestalt mit zwei gleich ausgebildeten Schenkeln 44, 46, die über einen Verbindungsabschnitt 48 miteinander verbunden sind. Sie umgreifen jeweils einen Kopfabschnitt des Trägers 30 bzw. der Ringscheibe 32, wobei sie sich in der gezeigten Ruheposition mit dem Verbindungsabschnitt 48 in radialer Richtung auf dem Kopfabschnitt abstützen. Bei einer Rotation der Rotorscheibe 4 führen die Dämpfungselemente 28 aufgrund der Fliehkraft eine radial nach außen gerichtete Bewegung aus, wobei sie mit einer verbindungsabschnittsseitigen Außenumfangsfläche 50 auf eine von einer Erhebung 52 gebildeten umfangsseitigen Anlagefläche 54 der jeweiligen vorderen Plattform 22 auflaufen. Die Anlagefläche 54 ist entsprechend der zu dämpfenden Schwingungsform gestaltet und an der Plattform 22 positioniert. Ebenso sind die Geometrie und die Masse der Dämpfungselemente 28 jeweils an die zu dämpfende Schwingungsform angepasst.

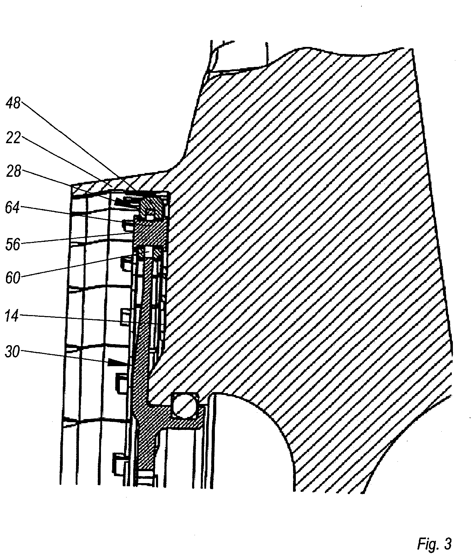

Die Dämpfungselemente 28 sind über jeweils zwei nieten- bzw. bolzenartige Verbindungselemente 56, 58, die gemäß Figur 3 durch jeweils ein dämpfungselementenseitiges Bohrungspaar 60 gesteckt und in trägerseitigen radialen Längsnuten 64 geführt sind, an dem Träger 30 in radialer sowie in umfangsseitiger Richtung in Grenzen beweglich gesichert. Die Bohrungspaare 60 und die Längsnuten 64 sind dabei derart zueinander ausgebildet, dass beim Auflaufen der Dämpfungselemente 28 auf die untere Plattformen 22 die Verbindungselemente 56, 58 entlastet sind. D. h., die Dämpfungselemente 28 stützen sich in radial ausgerückter Position bzw. in Arbeitsposition nicht an den Verbindungselementen 56, 58 ab, sondern sind von diesen beabstandet. In der Ruheposition stützen sich die Dämpfungselemente 28 hingegen über ihren jeweiligen Verbindungsabschnitt 48 auf dem Träger 30 auf, so dass auch in der Ruheposition die Verbindungselemente 56, 58 entlastet sind. Somit verhindern die Verbindungselemente 56, 58 vielmehr ein Verrutschen der Dämpfungselemente 28 in Umfangrichtung außerhalb der zulässigen Grenzen.

Unterhalb der vorderen Plattformen 22 im Bereich der Stirnfläche 14 ist eine nicht bezifferte Erhebung zur Bildung einer stirnseitigen Anlagefläche für das Dämpfungselements 28 gebildet, die sich in axialer Richtung des sich radial bewegenden Dämpfungselements 28 erstreckt und entsprechend der zu dämpfenden Schwingungsform gestaltet sowie positioniert ist und mit einer Beschichtung zur Einstellung des Reibverhaltens versehen sein kann. Die stirnseitige Anlagefläche bildet mit der umfangsseitigen Anlagefläche 54 quasi ein Winkelprofil und ist symmetrisch zur Hochachse des jeweiligen Dämpfungselements 28 in seiner Ruheposition angeordnet. Ebenso sind die Verbindungselemente 56, 58 bzw. die Längsnuten 64 symmetrisch zur Hochachse des jeweiligen Dämpfungselements 28 in seiner Ruheposition angeordnet, so dass ein Verkanten oder Klemmen der Dämpfungselemente 28 bei einer radialen Bewegung wirkungsvoll verhindert wird.

Bei einer Rotation der Rotorscheibe 4 werden die Dämpfungselemente 28 mit ihren Außenumfangsflächen 50 aufgrund der Fliehkraft nach außen an die umfangsseitigen Anlageflächen 54 gedrückt. Gleichzeitig reiben die Dämpfungselemente 28 mit dem der Stirnseite 14 zugewandten Schenkel 46 jeweils entlang der stirnseitigen Anlageflächen 70, so dass durch Energiedissipation zwischen den Dämpferelementen 28 und den schwingenden Anlageflächen 54, gegebenenfalls auch zwischen den Dämpferelementen 28 und dem Träger 30 an sich, eine präzise mechanische Dämpfung der jeweiligen Laufschaufel 6 und somit der gesamten Schaufelreihe 2 erfolgt.

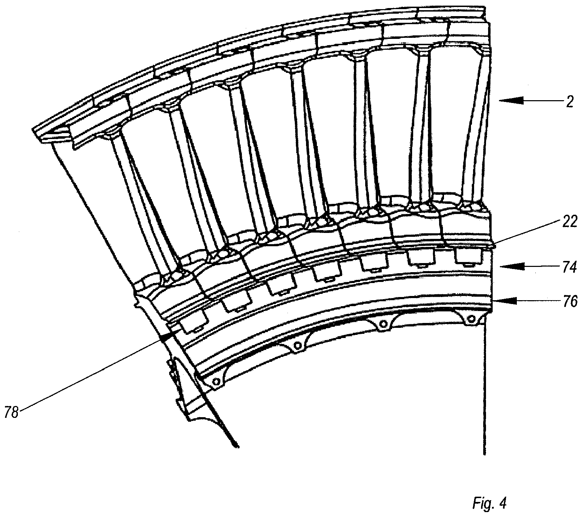

Figur 4 zeigt ein zweites erfindungsgemäßes Dämpfungssystem 74 zur Dämpfung von vorzugsweise Biege- und Torsionsschwingungsformen einer Laufschaufelreihe 2. Das Dämpfungssystem 74 basiert auf dem gleichen Wirkprinzip wie das vorbeschriebene Dämpfungssystem 26 nach den Figuren 1 bis 3. Der Wesentliche Unterschied zwischen den beiden Dämpfungssystemen 26, 74 besteht in der Führung ihrer Dämpfungselemente 28, 78 auf bzw. an dem Träger 30, 76.

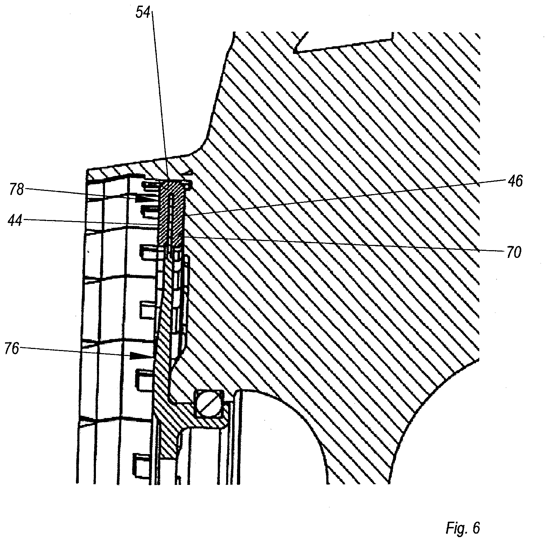

Das Dämpfungssystem 74 ist in einem unteren Plattformbereich 22 angeordnet und hat einen schaufelseitigen Träger 76, auf dem eine Vielzahl von nebeneinander angeordneten und voneinander beabstandeten Dämpfungselementen 78 geführt sind. Die Dämpfungselemente 78 sind zumindest in radialer Richtung bewegbar und haben jeweils eine symmetrische U-förmige Gestalt zum abschnittsweisen Umgreifen eines Kopfabschnitts des Trägers 76 mit zwei Schenkeln 44, 46 (Fig. 6).

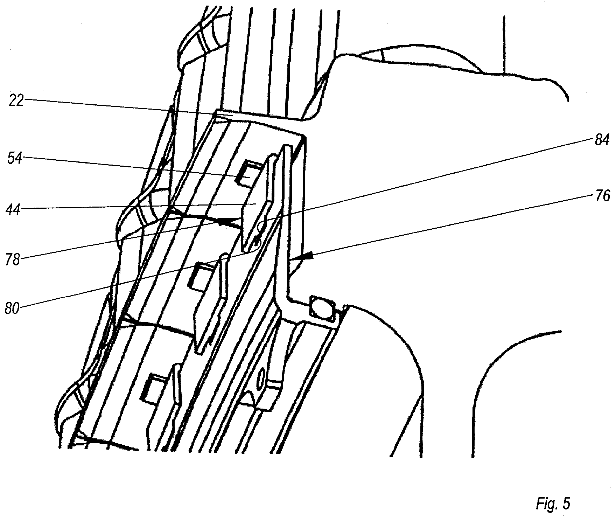

Die Führung bzw. Sicherung der Dämpfungselemente 78 an dem Träger 76 erfolgt wie in Figur 5 gezeigt über zwei innenseitig angeordnete und gegenüberliegende Gleitflächen 80 ihrer Schenkel 44, 46, die mit entsprechend ausgebildeten gegenüber benachbarten Flächenabschnitten zurückgestuften und sich in radialer Richtung erstreckenden Führungsflächen 84 des Trägers 76 im Wirkeingriff befinden.

Zur Optimierung der Dämpfungseigenschaften ist wie bei dem vorbeschriebenen ersten Dämpfungssystem 26 nach den Figuren 1 bis 3 im Bereich unterhalb der vorderen Plattformen 22 jeweils eine umfangsseitige Anlagefläche 54 und eine stirnseitige Anlagefläche 70 (s. Fig. 6) vorgesehen, die ein Winkelprofil bilden und symmetrisch zur Führung bzw. zur Hochachse des Dämpfungselemente 78 in Ruheposition angeordnet sind.

Bei einer Rotation der Rotorscheibe 4 werden die Dämpfungselemente 78 durch die Fliehkraft an die umfangsseitigen Anlageflächen 54 gedrückt. Gleichzeitig reiben die Dämpferelemente 78 gegen diese umfangsseitigen Anlagefläche 54 sowie gegen die stirnseitigen Anlageflächen 70 der Laufschaufel 6, so dass unter anderem eine mechanische Dämpfung durch die Energiedissipation infolge trockener Reibung zwischen den Dämpfungselementen 78 und den schwingenden Anlageflächen 54, 70, gegebenenfalls auch zwischen den Dämpfungselementen 78 und dem Träger 76 erfolgt.

Offenbart ist ein Dämpfungssystem zur Dämpfung von Schwingungen einer Laufschaufel eines Rotors einer Strömungsmaschine, dessen Dämpfungselement schaufelseitig derart geführt ist, dass es bei einer Rotation des Rotors eine radial nach außen gerichtete Bewegung ausführt und in Anlage mit einem unteren Plattformbereich der Laufschaufel bringbar ist, eine Laufschaufel mit einem derartigen Dämpfungssystem, ein Rotor mit einer Vielzahl derartiger Dämpfungssysteme sowie ein Verfahren zum Dämpfen von Laufschaufelschwingungen.

## Patentansprüche

1. Dämpfungssystem (26; 74) zur Dämpfung von Schwingungen einer Laufschaufel (6) eines Rotors einer Strömungsmaschine, beispielsweise eines Flugzeugtriebwerks, mit einem Dämpfungselement (28; 78), das an einem rotorseitigen Träger (30; 76) so geführt ist, dass es bei einer Rotation des Rotors eine radial nach außen gerichtete Bewegung ausführt und in Anlage mit einem unteren Plattformbereich (22) der Laufschaufel (6) bringbar ist, wobei das Dämpfungselement (28; 78) U-förmig ausgebildet ist und den Träger (30; 76) abschnittsweise umgreift, **dadurch gekennzeichnet, dass** im unteren Plattformbereich (22) eine von einer Erhebung (52) gebildete umfangsseitige Anlagefläche (54) als Anschlag für das Dämpfungselement (28; 78) angeordnet ist und eine stirnseitige Anlagefläche (70) zur Herstellung eines Reibkontakts zwischen dem Dämpfungselement (28; 78) und der Laufschaufel (6) vorgesehen ist.

2. Dämpfungssystem nach Anspruch 1, wobei das Dämpfungselement (28; 78) in Umfangsrichtung bewegbar gelagert ist.

3. Dämpfungssystem nach Anspruch 1 oder 2, wobei das Dämpfungselement (28) mittels zumindest eines Verbindungselements (56, 58) an dem Träger (30) gelagert ist, das in einer sich radial erstreckenden Längsnut (64) geführt ist.

4. Dämpfungssystem nach Anspruch 3, wobei beim Auflaufen des Dämpfungselements (28) auf den unteren Plattformbereich (22) das Verbindungselement (56, 58) entlastet ist.

5. Dämpfungssystem nach Anspruch 3, wobei das Dämpfungselement (78) gegenüberliegende Gleitflächen (80) zur Führung entlang zwei trägerseitiger Führungsflächen (84) hat.

6. Dämpfungssystem nach einem der vorhergehenden Ansprüche, wobei die Anlageflächen (54, 70) symmetrisch zur Hochachse des Dämpfungselements (28; 78) angeordnet sind.

7. Laufschaufel (6) einer Strömungsmaschine mit zumindest einem Dämpfungssystem (26; 74) nach einem der vorhergehenden Ansprüche.

8. Laufschaufel nach Anspruch 7 mit einem ersten Dämpfungssystem (26; 74) nach einem der vorhergehenden Ansprüche, das stromaufwärts der Laufschaufel angeordnet ist, und mit einem zweiten Dämpfungssystem (26; 74) nach einem der vorhergehenden Ansprüche, das stromabwärts der Laufschaufel angeordnet ist.

9. Rotor einer Strömungsmaschine mit einer Vielzahl von in Schaufelreihen (2) angeordneten Laufschaufeln (6), wobei an den Laufschaufeln (6) zumindest einer Schaufelreihe (2) jeweils ein Dämpfungssystem (26; 74) nach einem der Ansprüche 1 bis 6 angeordnet ist.

## Claims

1. Damping system (26; 74) for damping vibrations of a rotor blade (6) of a rotor of a turbomachine, for example an aircraft engine, comprising a damping element (28; 78) which is guided on a rotor-side support (30; 76) such that the damping element carries out a radially outward movement when the rotor rotates and can be brought into contact with a lower platform region (22) of the rotor blade (6), the damping element (28; 78) being U-shaped and surrounding the support (30; 76) in portions, **characterized in that** a circumferential contact surface (54) formed by an elevation (52) is arranged as a stop for the damping element (28; 78) in the lower platform region (22) and an end-face contact surface (70) for producing frictional contact between the damping element (28; 78) and the rotor blade (6) is provided.

2. Damping system according to claim 1, wherein the damping element (28; 78) is movably mounted in the circumferential direction.

3. Damping system according to either claim 1 or claim 2, wherein the damping element (28) is mounted on the support (30) by means of at least one connecting element (56, 58) which is guided in a radially extending longitudinal groove (64).

4. Damping system according to claim 3, wherein the strain on the connecting element (56, 58) is relieved when the damping element (28) runs onto the lower platform region (22).

5. Damping system according to claim 3, wherein the damping element (78) has opposite sliding surfaces (80) for guiding along two support-side guide surfaces (84).

6. Damping system according to any of the preceding claims, wherein the contact surfaces (54, 70) are arranged symmetrically with respect to the vertical axis of the damping element (28; 78).

7. Rotor blade (6) of a turbomachine, comprising at least one damping system (26; 74) according to any of the preceding claims.

8. Rotor blade according to claim 7, comprising a first damping system (26; 74) according to any of the preceding claims which is arranged upstream of the rotor blade, and comprising a second damping system (26; 74) according to any of the preceding claims which is arranged downstream of the rotor blade.

9. Rotor of a turbomachine, comprising a plurality of rotor blades (6) arranged in blade rows (2), wherein a damping system (26; 74) according to any of claims 1 to 6 is arranged on each of the rotor blades (6) of at least one blade row (2).

## Revendications

1. Système d'amortissement (26 ; 74) pour l'amortissement de vibrations d'une aube rotorique (6) d'un rotor d'une turbomachine, notamment d'un moteur d'avion, comprenant un élément d'amortissement (28 ; 78) qui est guidé sur un support (30 ; 76) du côté rotor de telle manière qu'il exécute un mouvement orienté radialement vers l'extérieur lors de la rotation du rotor et peut être amené en contact avec une zone de plate-forme inférieure (22) de l'aube rotorique (6), l'élément d'amortissement (28 ; 78) étant réalisé en forme de U et entourant par sections le support (30 ; 76), **caractérisé en ce qu'**une surface d'appui (54) circonférentielle formée par une élévation (52) est disposée dans la zone de plate-forme inférieure (22) comme butée pour l'élément d'amortissement (28 ; 78), et **en ce qu'**une surface d'appui frontale (70) est prévue pour établir un contact par frottement entre l'élément d'amortissement (28 ; 78) et l'aube rotorique (6).

2. Système d'amortissement selon la revendication 1, dans lequel l'élément d'amortissement (28 ; 78) est monté mobile dans la direction circonférentielle.

3. Système d'amortissement selon la revendication 1 ou 2, dans lequel l'élément d'amortissement (28) est monté sur le support (30) au moyen d'au moins un élément de liaison (56, 58) qui est guidé dans une rainure longitudinale (64) s'étendant de manière radiale.

4. Système d'amortissement selon la revendication 3, dans lequel l'élément de liaison (56, 58) est déchargé lorsque l'élément d'amortissement (28) se rapproche de la zone de plate-forme inférieure (22).

5. Système d'amortissement selon la revendication 3, dans lequel l'élément d'amortissement (78) comporte des surfaces de glissement (80) opposées pour le guidage le long de deux surfaces de guidage (84) du côté support.

6. Système d'amortissement selon l'une des revendications précédentes, dans lequel les surfaces de contact (54, 70) sont disposées symétriquement par rapport à l'axe vertical de l'élément d'amortissement (28 ; 78).

7. Aube rotorique (6) d'une turbomachine, comprenant au moins un système d'amortissement (26 ; 74) selon l'une des revendications précédentes.

8. Aube rotorique selon la revendication 7, comprenant un premier système d'amortissement (26 ; 74) selon l'une des revendications précédentes, disposé en amont de l'aube rotorique, et un second système d'amortissement (26 ; 74) selon l'une des revendications précédentes, disposé en aval de l'aube rotorique.

9. Rotor d'une turbomachine, comprenant une pluralité d'aubes rotoriques (6) disposées en séries d'aubes (2), dans lequel un système d'amortissement (26 ; 74) selon l'une des revendications 1 à 6 est disposé au niveau de chacune des aubes rotoriques (6) d'au moins une série d'aubes (2).
